# FASCICULE DE BREVET EUROPEEN

(11) **EP 0 677 650 B1**
(45) Date de publication et mention de la délivrance du brevet: **17.06.1998**
(21) Numéro de dépôt: 95400826.4
(22) Date de dépôt: 12.04.1995
(51) Int. Cl.: F02C 7/232

(54) **Circuit d'alimentation en carburant d'injecteurs de carburant**
Kraftstoffzufuhrsystem für Kraftstoffeinspritzdüsen
Fuel supply system for fuel injectors

(30) Priorité: 13.04.1994 FR 9404332
(43) Date de publication de la demande: 18.10.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Halin, Yves Robert, F-91250 Saint Germain les Corbeil (FR)

(56) Documents cités:
- EP-A- 0 227 273
- GB-A- 831 670
- GB-A- 2 134 244
- US-A- 2 591 880

## Description

L'exploitation en ligne des avions est soumise à des règles de sécurité extrêmement rigides. Tous les composants de ces machines, en particulier les moteurs qui en assurent la propulsion, sont soumis aux mêmes impératifs.

Lors de la conception de ces moteurs des analyses de pannes des systèmes de régulation du débit de carburant sont effectuées afin de s'assurer que des cas de pannes multiples ou dormantes ne peuvent pas être rencontrés.

Cependant, les exigences d'utilisation du matériel peuvent fixer des choix technologiques qui ne vont pas complètement satisfaire l'analyse de pannes. Ces choix sont évidemment de niveau très secondaire et ne mettent pas en jeu la sécurité des passagers et de l'avion.

C'est le cas des rampes d'injection de carburant et les injecteurs associés qui ne sont pas purgés lorsque le moteur, généralement une turbomachine, est arrêté.

Ce choix est délibéré afin de réduire au minimum le temps de démarrage du moteur, car, si le carburant est purgé dans les rampes et les injecteurs, il devient nécessaire de remplir de carburant ces éléments au moment d'un nouveau démarrage. Le temps de remplissage s'ajoute au temps normal du démarrage et l'augmente de manière significative vers une valeur inacceptable.

Cependant lorsqu'un moteur est arrêté, le corps haute-pression du moteur n'étant plus ventilé, il y a transfert de chaleur par rayonnement chaud du moteur vers les composants adjacents, en particulier vers les rampes d'injection et le carburant qu'elles contiennent.

Les injecteurs situés à l'extrémité de ces rampes comportent un clapet de pressurisation, ce qui permet d'obtenir une étanchéité du carburant à bas niveau de pression, par exemple à un tarage de 1 bar.

Si l'augmentation de la température du carburant contenu entre la vanne d'arrêt et les injecteurs permet à ce carburant d'atteindre une tension de valeur supérieure au tarage du clapet de pressurisation des injecteurs, les clapets s'ouvrent et la vaporisation du carburant se produit dans les rampes d'injections.

Le carburant s'échappe par les injecteurs dans la chambre de combustion qui est encore chaude. Il y a auto-inflammation du carburant ce qui entraîne la présence de flammes à la sortie du moteur au travers des aubages des turbines.

Ce phénomène est plus courant par temps chaud et avec des carburants très volatils comme le JP4.

Le but de l'invention est d'empêcher cet l'écoulement intempestif et indésirable du carburant dans la chambre de combustion et son inflammation.

Le dispositif faisant l'objet de cette invention, permet, à l'arrêt du moteur, même dans les cas d'utilisation de carburants très volatils, d'empêcher l'augmentation du niveau de pression dans les rampes d'injection par une décharge de celles-ci vers un circuit de drainage si la vaporisation du carburant est obtenue dans les rampes par une augmentation de la température.

L'invention est donc relative à un circuit d'alimentation en carburant d'injecteurs de carburant, tel que notamment utilisé dans une turbomachine, et connu par GB-A - 831 670, comprenant: un réservoir de carburant; une source de carburant sous pression; un conduit d'alimentation en carburant raccordé à ladite source de carburant; au moins un conduit de distribution de carburant; au moins un injecteur de carburant, chaque injecteur de carburant communiquant avec un conduit de distribution de carburant; et un clapet d'arrêt. Selon l'invention, un clapet de pressurisation est associé à chaque injecteur de carburant, chaque clapet de pressurisation étant taré à une pression déterminée commune à tous les clapets de pressurisation et étant associé à un injecteur de carburant en étant placé sur le conduit de distribution de carburant communiquant avec ledit injecteur de carburant, en amont de cet injecteur de carburant; au clapet d'arrêt, sont raccordés, d'une part, la partie de chaque conduit de distribution de carburant située en amont du clapet de pressurisation placé sur ledit conduit de distribution de carburant, d'autre part, ledit conduit d'alimentation en carburant, et, qui est susceptible d'occuper sélectivement une première position dans laquelle la communication est établie entre lesdits conduit d'alimentation en carburant et conduit de distribution de carburant, et une deuxième position, dans laquelle le conduit de distribution de carburant est isolé du conduit d'alimentation en carburant; et un conduit de décharge est raccordé au clapet d'arrêt, cependant qu'un clapet de décharge, taré à une pression inférieure à ladite pression déterminée, est placé sur ce conduit de décharge et qu'en outre, dans ladite deuxième position du clapet d'arrêt, la communication est établie entre ladite partie du conduit de distribution de carburant située en amont du clapet de pressurisation et la partie du conduit de décharge située en amont du clapet de décharge.

Les avantageuses dispositions suivantes sont en outre de préférence adoptées:
- la pression de tarage du clapet de décharge a une valeur proche de ladite pression déterminée, et est, de préférence supérieure à 0,9 fois cette pression déterminée;
- le clapet d'arrêt comporte un organe mobile susceptible d'obturer le conduit d'alimentation en carburant, attelé à un dispositif de rappel dans sa deuxième position et à un vérin à fluide, d'effet antagoniste dudit dispositif de rappel, ayant une chambre de travail raccordée au conduit d'alimentation en carburant;
- le clapet d'arrêt comportant un corps de clapet muni d'un raccord de purge destiné au branchement d'un conduit de purge, le conduit de décharge est branché sur ledit raccord de purge.

L'avantage principal de l'invention réside effectivement dans la suppression des écoulements indésirables de carburant dans la chambre de combustion, et dans la suppression qui en résulte de l'émission de flammes à la sortie du moteur, celui-ci étant à l'arrêt.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels:
- les figures 1 et 2 sont les schémas représentant un même circuit d'alimentation selon un premier mode de réalisation, respectivement dans deux configurations distinctes de fonctionnement; et,
- la figure 3 représente une variante de réalisation d'un constituant du circuit des figures 1 et 2.

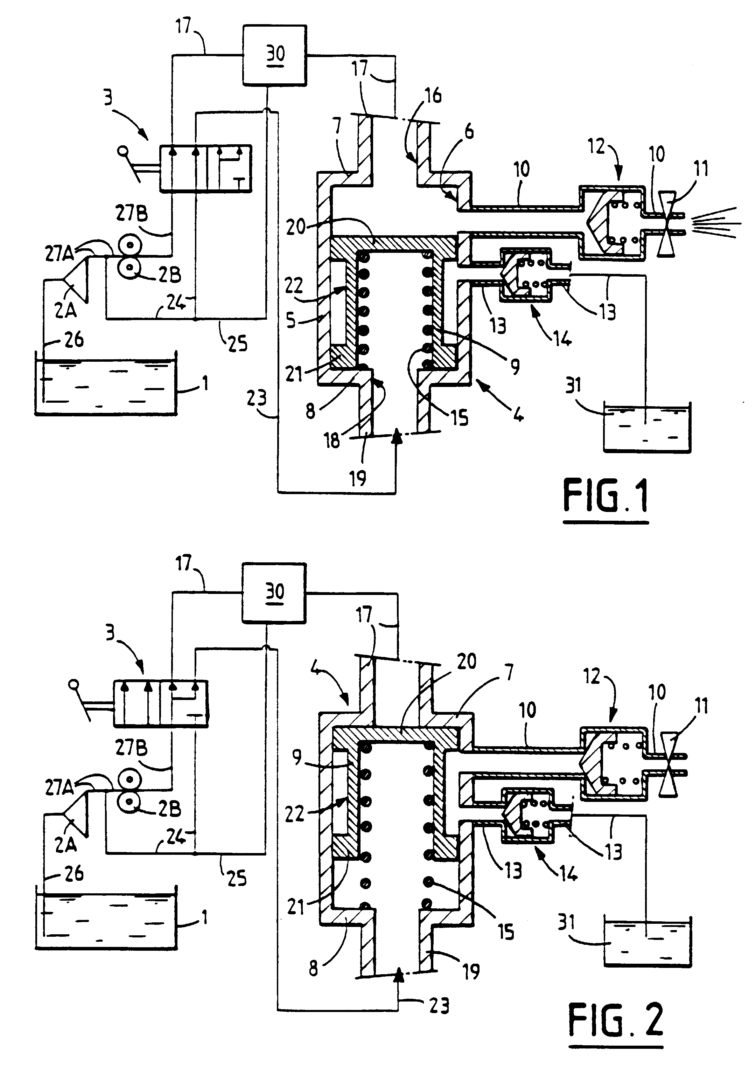

Le circuit des figures 1 et 2 est le circuit d'alimentation en carburant des injecteurs de carburant réalisant l'injection de carburant dans la chambre de combustion d'une turbomachine, telle qu'un turboréacteur d'avion.

Ce circuit d'alimentation en carburant comprend:
un réservoir de carburant 1;
une pompe basse pression 2A d'alimentation en carburant;
une pompe haute pression 2B d'alimentation en carburant;
un distributeur de fluide à deux positions 3;
un clapet d'arrêt 4 comportant un corps 5 muni d'un alésage 6 et de deux fonds 7 et 8 transversaux à l'axe dudit alésage, et, un tiroir 9 monté coulissant à l'intérieur dudit alésage entre les deux fonds 7 et 8;
des conduits de distribution de carburant 10 raccordés au corps 5, débouchant dans l'alésage 6 entre deux sections transversales de cet alésage;
des injecteurs de carburant 11 et des clapets de pressurisation 12 desdits injecteurs, placés sur les conduits de distribution de carburant 10, un injecteur de carburant 11 étant raccordé à l'extrémité du conduit de distribution de carburant 10 opposée au raccord de celui-ci au corps 5 du clapet d'arrêt, et un clapet de pressurisation 12 étant placé sur chaque conduit de distribution de carburant 10 entre ledit injecteur de carburant 11 et le clapet d'arrêt 4, les clapets de pressurisation 12 ayant tous une même pression de tarage déterminée P12;
un conduit de décharge 13 raccordé au corps 5 du clapet d'arrêt 4, débouchant dans l'alésage 6, relié à une capacité de purge (31);
un clapet de décharge 14 placé sur le conduit de décharge 13, et ayant une pression de tarage P14 de préférence voisine de la pression déterminée P12 tout en y étant légèrement inférieure: par exemple, P14 inférieure à P12 (P14 < P12), mais supérieure à 0,9 P12 (P14 > 0,9 P12);
un ressort 15, interposé entre le tiroir 9 et le fond 8;
un premier raccord axial 16, qui débouche axialement à l'intérieur du corps en traversant le fond 7 et relie l'intérieur dudit corps à un conduit externe 17;
un élément principal (30) de régulation de l'alimentation en carburant, placé sur ledit conduit externe 17, entre le distributeur de fluide 3 et le premier raccord axial 16;
un deuxième raccord axial 18, qui débouche axialement à l'intérieur du corps S en traversant le fond 8 et relie l'intérieur dudit corps à un conduit externe 19;
deux extrémités 20, 21 axiales du tiroir 9, formant pistons à l'intérieur de l'alésage 6, susceptibles d'être en appui, l'une 21 sur le fond 8, dans une première position du tiroir 9 (figure 1), l'autre 20 sur le fond 7 dans une deuxième position du tiroir 9 (figure 2);
une gorge annulaire 22 ménagée à la périphérie axiale du tiroir 9, entre les deux pistons 20, 21, placée en regard de l'alésage 6 du corps 5;
une source d'énergie, constituée par le fluide contenu dans un conduit 23 reliant le conduit 19 au distributeur de fluide 3, ajoute son effet à celui du ressort 15, et tend à placer le tiroir 9 dans sa deuxième position, dans laquelle, d'une part, le piston 20 obture le conduit d'alimentation en carburant 17 et isole le ou les conduits de distribution de carburant 10 et le conduit de décharge 13, du conduit d'alimentation en carburant 17, d'autre part, la gorge 22 met en communication le ou les conduits de distribution de carburant 10 avec le conduit de décharge 13;
le conduit de refoulement 27A de la pompe 2A, qui constitue en outre le conduit d'aspiration de la pompe 2B;
le conduit de refoulement 27B de la pompe 2B, raccordé au distributeur de fluide 3;
un conduit 24 reliant le conduit 27A au distributeur de fluide 3;
un conduit 25 reliant le raccord d'échappement du carburant en excédent de l'élément principal de régultation 30 au conduit 24;
le conduit d'aspiration 26 de la pompe 2A, reliant celle-ci au réservoir de carburant 1;
le conduit 17 d'alimentation en carburant étant en outre raccordé au distributeur de fluide 3.

Les deux positions du distributeur de fluide 3 correspondent:
la première position, aux mises en communication du conduit de refoulement 27B et du conduit d'alimentation en carburant 17, et, des conduits 23 et 24; et,
la deuxième position, à la mise en communication du conduit de refoulement 27B et des conduits 17 et 23, et, à l'obturation du conduit 24.

Il y a lieu de noter que:
dans la première position du distributeur de fluide 3 (figure 1), l'effet de la pression du carburant sous pression contenu dans le conduit de refoulement 27B et dans le conduit d'alimentation en carburant 17 est prépondérant sur ceux, antagonistes, du ressort 15 et du fluide basse pression contenu dans les conduits 27A, 24 et 23, et place le tiroir 9 du clapet d'arrêt 4 dans sa première position;
dans la première position du tiroir 9 (figure 1), celui-ci met en communication le ou les conduits de distribution de carburant 10 avec le conduit d'alimentation en carburant 17, et isole le conduit de décharge 13 des autres conduits 10 et 17;
au contraire, dans la deuxième position du distributeur de fluide 3 (figure 2), l'effet prépondérant est celui combiné du ressort 15 et du fluide haute pression contenu dans les conduits 27B et 23, qui place le tiroir 9 dans sa deuxième position;
aussi bien dans la première, que dans la deuxième position du tiroir 9 celui-ci isole le conduit 19 des autres conduits 17, 10 et 13;
enfin, le réservoir de carburant 1 peut être un réservoir pressurisé.

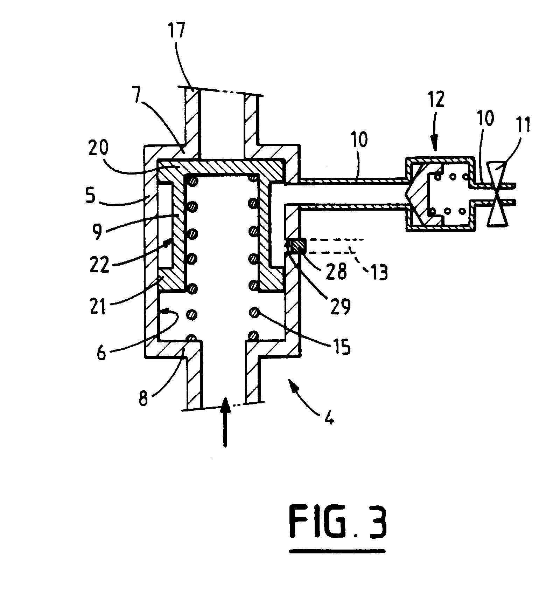

La figure 3 représente une variante de réalisation du clapet d'arrêt 4 dans laquelle celui-ci est muni d'un raccord 29, normalement obturé par un bouchon 28. Ce raccord qui existe dans certains clapets d'arrêt, a pour fonction le branchement éventuel de conduits de purge, c'est-à-dire de conduits qui, dans la deuxième position du tiroir 9 (figure 3), permettent l'évacuation, généralement sans pression, du carburant contenu dans les conduits de distribution 10, dans la gorge 22 et dans le raccord 29. L'existence du raccord 29 peut être mise à profit, non pas pour y brancher un conduit de purge, mais pour y brancher ledit conduit de décharge 13 déjà cité dans la réalisation des figures 1 et 2, bien entendu après avoir ôté le bouchon 28.

Le fonctionnement des réalisations conformes à l'invention est exposé ci-après en regard des figures 1 et 2, la réalisation de la figure 3 possédant un fonctionnement identique à celui de la réalisation des figures 1 et 2, ne se distinguant de cette dernière réalisation que par l'origine du raccord de branchement du conduit de décharge 13, spécifique dans un cas, déjà existant dans l'autre cas.

Lorsque le distributeur de fluide 3 est placé dans sa première position, la pression du carburant parvenant dans le raccord 16 pousse automatiquement le tiroir 9 qu'il place dans sa première position (figure 1). Le carburant sous pression est de ce fait véhiculé dans le conduit d'alimentation en carburant 17 et dans le où les conduits de distribution de carburant 10. Sa pression, supérieure à la pression déterminée de tarage des clapets de pressurisation 12 soulèvent les obturateurs desdits clapets de pressurisation de leurs sièges, ce qui permet le passage du carburant jusqu'aux, et à travers les injecteurs de carburant 11. Dans cette configuration, le clapet de décharge 14 ne joue aucun rôle.

Lorsque le distributeur de fluide 3, à partir de sa première position est placé dans sa deuxième position (figure 2), le carburant refoulé par la pompe haute pression 2B, d'une part, par le conduit 17, alimente l'élément principal de régulation 30, d'autre part parvient, par les conduits 27B et 23, au deuxième raccord axial 18. L'action combinée du ressort 15 et de la pression du fluide haute pression contenu dans le conduit 23 devient prédominante sur celle de la pression du fluide contenu dans le conduit 17, et place le tiroir 9 dans sa deuxième position, dans laquelle la communication est établie entre le ou les conduits 10 et le conduit de décharge 13, le tiroir 9 obturant en outre le raccord 16.

L'alimentation principale de carburant ayant cessé, après l'obturation du raccord 16 par le piston 20, le moteur s'arrête. Mais il est possible que l'enceinte de la chambre de combustion ait une température élevée, ce qui provoque une élévation de la température du carburant contenu dans la partie du ou des conduits de distribution 10 comprise entre le ou les clapets de pressurisation 12 et le clapet d'arrêt 4, ainsi qu'une augmentation du volume de ce carburant. Le volume de carburant excédentaire s'échappe en ouvrant le clapet de décharge 14 dont la pression de tarage est inférieure à celle du ou des clapets de pressurisation 12. Ces derniers clapets restent, par ailleurs, dans leur configuration d'obturation, interdisant toutes fuites de carburant vers les injecteurs de carburant 11 et la chambre de combustion. Ainsi, l'inconvénient majeur, connu antérieurement, des conduits non purgés est supprimé: après l'arrêt de l'alimentation en carburant, aucune flamme indésirable ne traverse le moteur, ni ne parvient dans le conduit d'échappement. Et, cependant, le système de l'invention présente les avantages des systèmes non purgés, dans lesquels les conduits restent emplis de carburant, prêts à une relance rapide de la carburation et du fonctionnement du moteur.

A noter que lorsque (figure 3) le conduit de décharge 13 est branché sur un raccord de purge 29 préexistant, le système de l'invention n'est en aucun cas assimilable à un système possédant une purge, puisqu'à l'inverse de tels systèmes, l'invention aboutit au maintien du ou des conduits dans leur configuration emplis de carburant.

Bien sûr, l'intérêt de choisir la pression de tarage du clapet de décharge 14 proche de celle du clapet de pressurisation 12 est de laisser s'échapper hors des conduits de distribution 10 que la seule quantité de carburant qui évite l'ouverture du ou des clapets de pressurisation 12.

## Revendications

1. Circuit d'alimentation en carburant d'injecteurs de carburant, tels que notamment utilisés dans une turbomachine, comprenant:
un réservoir de carburant (1):
une source de carburant sous pression (2A-2B-30) reliée au réservoir (1);
un conduit d'alimentation en carburant (17) raccordé à ladite source de carburant (30);
au moins un conduit de distribution de carburant (10);
au moins un injecteur de carburant (11), chaque injecteur de carburant communiquant avec un conduit de distribution de carburant (10);
et un clapet d'arrêt (4);
caractérisé en ce qu'un clapet de pressurisation (12) est associé à chaque injecteur de carburant (11), chaque clapet de pressurisation (12) étant taré à une pression déterminée commune à tous les clapets de pressurisation et étant associé à un injecteur de carburant (11) en étant placé sur le conduit de distribution de carburant (10) communiquant avec ledit injecteur de carburant, en amont de cet injecteur de carburant;
qu'au clapet d'arrêt (4) sont raccordés, d'une part, la partie de chaque conduit de distribution de carburant (10) située en amont du clapet de pressurisation (12) placé sur ledit conduit de distribution de carburant, d'autre part, ledit conduit d'alimentation en carburant (17), et, qui occupe sélectivement une première position dans laquelle la communication est établie entre lesdits conduit d'alimentation en carburant (17) et conduit de distribution de carburant (10), et, une deuxième position, dans laquelle le conduit de distribution de carburant (10) est isolé du conduit d'alimentation en carburant (17);
et qu'un conduit de décharge (13) est raccordé au clapet d'arrêt (4), cependant qu'un clapet de décharge (14), taré à une pression inférieure à ladite pression déterminée, est placé sur ce conduit de décharge (13) et qu'en outre, dans ladite deuxième position du clapet d'arrêt (4), la communication est établie entre ladite partie du conduit de distribution de carburant (10) située en amont du clapet de pressurisation (12) et la partie du conduit de décharge (13) située en amont du clapet de décharge (14).

2. Circuit d'alimentation en carburant selon la revendication 1,
caractérisé en ce que la pression de tarage du clapet de décharge (14) a une valeur proche de ladite pression déterminée.

3. Circuit d'alimentation en carburant selon la revendication 2,
caractérisé en ce que la pression de tarage du clapet de décharge (14) est supérieure à 0,9 fois ladite pression déterminée.

4. Circuit d'alimentation en carburant selon l'une quelconque des revendications 1 à 3,
caractérisé en ce que le clapet d'arrêt (4) comporte un organe mobile (9) susceptible d'obturer le conduit d'alimentation en carburant (17) et attelé à un dispositif (15-23) de rappel dans sa deuxième position et à un vérin de fluide (20), d'effet antagoniste dudit dispositif de rappel, ayant une chambre de travail raccordée au conduit d'alimentation en carburant (17).

5. Circuit d'alimentation en carburant selon l'une quelconque des revendications 1 à 4,
caractérisé en ce que le clapet d'arrêt (4) comportant un corps de clapet (5) muni d'un raccord de purge (29) destiné au branchement d'un conduit de purge, le conduit de décharge (13) est branché sur ledit raccord de purge (29).

## Patentansprüche

1. Kraftstoffzufuhrsystem für Kraftstoffeinspritzungen, wie sie insbesondere in einer Turbomaschine verwendet werden, aufweisend:
einen Kraftstoffbehälter (1),
eine Quelle für Kraftstoff unter Druck (2A-2B-30), die mit dem Behälter (1) verbunden ist,
eine Treibstoffzufuhrleitung (17), die mit der Treibstoffquelle (13) verbunden ist, wenigstens eine Kraftstoffverteilerleitung (10),
wenigstens eine Kraftstoffeinspritzung (11), wobei jede Kraftstoffeinspritzung mit der Kraftstoffverteilerleitung (10) verbunden ist,
und eine Absperrklappe (4),
**dadurch gekennzeichnet**, daß eine Druckklappe (12) jeder Kraftstoffeinspritzung (11) zugeordnet ist, wobei jede Druckklappe (12) auf einen vorbestimmten Druck tariert ist, der sämtlichen Druckklappen gemeinsam ist, und mit einer Kraftstoffeinspritzung (11) verbunden ist, indem sie in der Kraftstoffverteilerleitung (10), die mit der Kraftstoffeinspritzung verbunden ist, stromaufwärts dieser Kraftstoffeinspritzung angeordnet ist,
daß eine Absperrklappe (4) einerseits mit dem Teil jeder Kraftstoffverteilerleitung (10), der sich stromaufwärts der Druckklappe (12) befindet, die in der Kraftstoffverteilerleitung angeordnet ist, und andererseits mit der Kraftstoffzufuhrleitung (17) verbunden ist, und sie selektiv eine erste Position, in der die Verbindung zwischen der Kraftstoffzufuhrleitung (17) und der Kraftstoffverteilerleitung (10) geschaffen ist, und eine zweite Position einnimmt, in der die Kraftstoffverteilerleitung (10) nicht mit der Kraftstoffzufuhrleitung (17) verbunden ist, und
daß eine Ablaßleitung (13) mit der Absperrklappe verbunden ist, wobei eine Ablaßklappe (14), die auf einen Druck unterhalb des genannten vorbestimmten Drucks tariert ist, in der Ablaßleitung (13) angeordnet ist und darüber hinaus in der zweiten Position der Absperrklappe (4) die Verbindung zwischen dem genannten Teil der Kraftstoffverteilerleitung (10), der sich stromaufwärts der Druckklappe (12) befindet, und dem Teil der Ablaßleitung (13) erreicht wird, der stromaufwärts der Ablaßklappe (14) liegt.

2. Kraftstoffzufuhrsystem nach Anspruch 1,
**dadurch gekennzeichnet**, daß der Tarierdruck der Ablaßklappe (14) einen Wert nahe dem genannten vorbestimmten Druck aufweist.

3. Kraftstoffzufuhrsystem nach Anspruch 2,
**dadurch gekennzeichnet**, daß der Tarierdruck der Ablaßklappe (14) mehr als das 0,9-fache des vorbestimmten Drucks beträgt.

4. Kraftstoffzufuhrsystem nach einem der Ansprüche 1 bis 3,
**dadurch gekennzeichnet**, daß die Absperrklappe (4) ein bewegbares Element (9) aufweist, das die Kraftstoffzufuhrleitung (17) verschließen kann und mit einem Hydraulikzylinder (20) gekoppelt ist, der die entgegengesetzte Wirkungsrichtung der Rückholvorrichtung aufweist, und eine Arbeitskammer aufweist, die mit der Kraftstoffzufuhrleitung (17) verbunden ist.

5. Kraftstoffzufuhrsystem nach einem der Ansprüche 1 bis 4,
**dadurch gekennzeichnet,** daß die Absperrklappe (4) einen Klappenkörper (5) aufweist, der einen Entleerverbinder aufweist, der zur Verbindung mit einer Entleerleitung dient, wobei die Ablaßleitung (13) mit dem Entleerverbinder (29) verbunden ist.

## Claims

1. Circuit for supplying fuel to fuel injectors, especially such as those used in a turbomachine, comprising:
a fuel tank (1):
a source (2A-2B-30) of pressurized fuel connected to the tank (1);
a fuel supply pipe (17) connected to the said source (30) of fuel;
at least one fuel distribution pipe (10);
at least one fuel injector (11), each fuel injector communicating with one fuel distribution pipe (10);
and a shut-off valve (4);
characterized in that a pressurizing valve (12) is associated with each fuel injector (11), each pressurizing valve (12) being set to a given pressure which is common to all the pressurizing valves and being associated with a fuel injector (11), being installed in the fuel distribution pipe (10) that communicates with the said fuel injector upstream of this fuel injector; in that connected to the shut-off valve (4) are, on the one hand, that part of each fuel distribution pipe (10) that is upstream of the pressurizing valve (12) installed in the said fuel distribution pipe and, on the other hand, the said fuel supply pipe (17), which shut-off valve selectively occupies a first position in which communication is established between the said fuel supply pipe (17) and the said fuel distribution pipe (10), and a second position in which the fuel distribution pipe
(10) is isolated from the fuel supply pipe (17);
and in that a discharge pipe (13) is connected to the shut-off valve (4) while a discharge valve (14), set to a pressure lower than the said given pressure, is installed in this discharge pipe (13) and in that furthermore, in the said second position of the shut-off valve (4), communication is established between the said part of the fuel distribution pipe (10) that is upstream of the pressurizing valve (12) and that part of the discharge pipe (13) that is upstream of the discharge valve (14).

2. Fuel supply circuit according to Claim 1, characterized in that the pressure to which the discharge valve (14) is set has a value close to the said given pressure.

3. Fuel supply circuit according to Claim 2, characterized in that the pressure to which the discharge valve (14) is set is more than 0.9 times the said given pressure.

4. Fuel supply circuit according to any one of Claims 1 to 3, characterized in that the shut-off valve (4) has a moving part (9) which can shut off the fuel supply pipe (17) and is coupled to a device (15-23) returning it to its second position and to a fluid ram (20) whose effect opposes that of the said return device, having a working chamber connected to the fuel supply pipe (17).

5. Fuel supply circuit according to any one of Claims 1 to 4, characterized in that with the shut-off valve (4) having a valve body (5) with a drainage connector (29) intended for connection to a drainage pipe, the discharge pipe (13) is connected to the said drainage connector (29).
